# EUROPEAN PATENT SPECIFICATION

(11) **EP 3 533 342 B1**
(45) Date of publication and mention of the grant of the patent: **03.08.2022**
(21) Application number: 19159252.6
(22) Date of filing: 26.02.2019
(51) Int. Cl.: A23L 13/00, A23L 27/00, A23L 23/00

(54) **A PROCESS FOR THE PRODUCTION OF A BASE FOR RAGÙ OR STUFFINGS**
VERFAHREN ZUR HERSTELLUNG EINER BASIS FÜR RAGOUT ODER FÜLLUNGEN
PROCÉDÉ DE PRODUCTION D'UNE BASE POUR RAGÙ OU FARCES

(30) Priority: 02.03.2018 IT 201800003250
(43) Date of publication of application: 04.09.2019
(60) Divisional application: 22180331.5
(73) Proprietor: Ambiente e Nutrizione S.r.l., 20089 Rozzano (MI) (IT)
(72) Inventor: VEZZANI, Massimo, 20089 Rozzano (Milano) (IT)
(74) Representative: Ferreccio, Rinaldo

(56) References cited:
- DATABASE WPI Week 201482 2014 Thomson Scientific, London, GB; AN 2014-W11467 XP002784809, & CN 104 041 779 A (CHEN X) 17 September 2014 (2014-09-17)
- DATABASE WPI Week 201654 2016 Thomson Scientific, London, GB; AN 2016-31624F XP002784810, & CN 105 533 461 A (UNIV JIANGNAN) 4 May 2016 (2016-05-04)
- DATABASE WPI 2015 Thomson Scientific, London, GB; AN 2015-665484 XP002792097, & CN 104 921 153 A (YANGZHOU MEIRUI FOOD CO LTD) 23 September 2015 (2015-09-23)

## Description

### Background

The present invention relates to the sector of the food industry.

More specifically, the present invention relates to an industrial process for the production of a base for minced meat-based sauces, such as, for example, ragù or stuffings.

### Prior art

Ragù is known to be one of the most popular sauces in Italian and international cuisine, typically used as a sauce for first courses.

Likewise, the preparation of this sauce is known to require several hours of preparation for the long cooking time, over a low heat, of the minced meat (usually beef and pork) and the selected vegetables in order to guarantee the development of its characteristic taste and aroma and to obtain a pleasant texture of the minced meat on the palate.

In particular, one of the most important factors to be evaluated during the preparation of a sauce containing meat, including ragù, is the texture of the meat in the finished sauce.

In fact, the traditional ragù recipe requires the meat to be characterized by a typical granular texture, wherein the granules of minced meat, uniformly blended into the sauce, can still be appreciated on the palate after cooking, because the texture thereof has remained such that it can immediately be recognized upon tasting.

Due to the lengthy preparation of the ragù, the consumer frequently uses industrially-prepared ready-made sauces, which can be preserved at room temperature, packed in tins or glass jars, which have been subjected to a sterilization process, or packaged pasteurized sauces kept in a fridge or, lastly, frozen sauces, which have also been subjected to a pasteurization process.

However, sometimes, the texture of the ready-made ragù does not fully satisfy the consumer.

In fact, due to various factors typical of industrial preparations, such as, for example, maintaining high temperatures to guarantee the microbiological safety of the product, the rapid preparation timing on an industrial scale, the considerable addition of aromas for correcting the taste, the use of acidity correctors caused by the presence of significant quantities of tomato and the optional addition of preservatives, can change the final product in terms of texture and taste, which differ from traditional homemade sauces.

Industrially-prepared ready-made sauces are known to often substantially consist of a homogenous mixture of minced meat, spices, vegetables and tomato sauce, wherein the granules of minced meat are no longer recognizable to the palate due to the aforesaid industrial operating conditions, which influence the fibrousnesss and texture of the meat in the final product.

The same problems can also be encountered on tasting sauces based on minced meat, vegetables and spices, which form the filling of the so-called industrially-prepared "stuffed-pasta", which, due to the aforesaid operating conditions, have a negative influence on the texture of the ingredients composing such fillings.

CN 104 041 779 discloses a process in which meat slices having a length of 1-3 cm and a thickness of 0.5-1.5 cm are boiled and subsequently fried in boiling oil (140-240°C) for 5-15 minutes.

CN 105 533 461 discloses a process in which meat is boiled in water with spices and flavors and then is frozen and cut into slices, having a length of 6.5 cm, a width of 4.5 cm and a thickness of 0.3 cm. Such slices are finally sautéed in vegetable oil with vegetables, flavors and sauces.

CN 104 921 153 discloses a process in which meat slices having a thickness of 3-5 mm, and a length of 40-80 mm are stir-fried for 8-12 minutes, and then added to a soup of vegetables, which has been separately boiled.

The problem underlying the present invention consists of providing a base for ragù or similar industrially-prepared sauces, as defined above, which maintain the particle size of the minced meat according to the traditional sauce recipe, in other words, so that the granules of cooked meat can be recognized immediately by the consumer on tasting.

### Summary of the invention

The problem has been overcome by providing a process for the production of a base for ragù or stuffings, comprising minced meat, vegetables and optional complementary ingredients, the process comprising a step a) of subjecting minced meat and, optionally, minced or chopped vegetables and complementary ingredients to a blanching in water at a temperature of 90°-100°C for 4-8 minutes and a subsequent step b) of browning said blanched minced meat and, optionally, said vegetables and said complementary ingredients.

The term "complementary ingredients" is understood to mean ingredients complementary to the recipe, for which the product of the present invention is used. Such complementary ingredients add flavour and enhance the base for ragù or stuffings of the invention and comprise, for example, salt, oil, pepper, garlic, chopped seasonings known in the culinary field, including rosemary, sage, mint, oregano, parsley, thyme, bay, cloves, basil, chives, marjoram, nutmeg and coriander. They can also include eggs, animal fats, (lard), dairy products, such as butter, ricotta and cream, chopped mushrooms, breadcrumbs and flour.

The expression "base for stuffings" is generally understood to mean the bases for stuffings and fillings intended to make stuffed pastas, meats and vegetables. In fact, the bases for fillings described in the present invention are adapted to fill all kinds of stuffed pasta.

Preferably, in step a) only the minced meat is subjected to a blanching and in step b) the blanched minced meat is subjected to browning after the addition thereto of minced or chopped vegetables and optional complementary ingredients.

Preferably, in step b) chopped vegetables with a particle size from 5 to 15 mm, preferably from 5 to 8 mm and optional complementary ingredients are added to the blanched minced meat.

Preferably, step a) of blanching in water at 90°-100°C is carried out by means of a continuous boiler.

Preferably, the continuous boiler consists of a cylindrical body with a heating jacket, closed at opposite ends by end plates, provided with inlet and discharge openings, having a coaxial screw rotor rotatably supported therein.

Preferably, the minced meat is fed into the continuous boiler with a flow rate from 90 kg/h to 500 kg/h.

Preferably, step b) of browning is carried out by means of steps of:
- providing a turbo-reactor comprising a cylindrical body with a heating jacket, closed at opposite ends by end plates, provided with at least one inlet opening and at least one discharge opening having a coaxial bladed rotor rotatably supported therein;
- feeding a flow of said blanched minced meat and a flow of said optionally blanched, minced or chopped vegetables, as well as the aforesaid optional complementary ingredients into said continuous boiler, through said at least one inlet opening, the inner wall of the turbo-cooker being maintained at a temperature from 150°C to 250°C by means of said heating jacket and the rotor being rotated at a peripheral speed from 5 m/s to 10 m/s (i.e. from 270 rpm to 540 rpm, preferably at 7.5 m/s (i.e. 400 rpm),
- discharging from the at least one outlet opening of the turbo-cooker a continuous flow of said base, comprising minced meat and vegetables and optional complementary ingredients.

Preferably, the minced meat for such base has a particle size from 2 to 10 mm, conveniently from 4 to 8 mm.

Preferably, in step b) of browning, the blanched minced meat is fed into the turbo-cooker with a flow rate from 90 kg/h to 500 kg/h.

Preferably, step b) of browning takes place at a temperature from 130°C to 180°C, for a period of time from 1 minute to 5 minutes.

Such temperature range is particularly adapted to obtain a base for ragù or similar sauces according to the present invention. In fact, a temperature of less than 130°C can determine the boiling of the meat, negatively influencing the texture and fibrousness of the ingredients; a temperature of above 180°C causes the meat to burn, thus reducing the quality and organoleptic properties of the final product.

Preferably, in step b) a flow of broth is fed through the at least one inlet opening at the same time as the flow of blanched minced meat and the flow of minced or chopped vegetables and of the aforesaid optional complementary ingredients.

Preferably, the broth consists of the water used in step a) of blanching the meat, the optional vegetables and the optional complementary ingredients and of fat released by the raw minced meat during step a).

Advantageously, the process according to the present invention allows a base of minced meat, minced or chopped vegetables and optional complementary ingredients to be obtained, which enables a ragù or similar sauce to be obtained, by adding tomato sauce and further optional ingredients, in which the particles of the meat are immediately recognizable on tasting by the consumer.

Advantageously, step a), which consists of a quick blanching of the minced meat in boiling water, causes the pre-coagulation of the meat, a phenomenon whereby the proteins present on the surface of the meat coagulate rapidly, thus keeping the juices of the meat inside the particles of meat and also enabling the preservation of the compact shape of the particles during step b) of browning.

A further advantage of the present invention is represented by the possibility of recovering the water used in step a) of blanching the minced meat, the vegetables and the optional complementary ingredients; such water, right because in contact with these ingredients, is aromatized, becoming an aromatized broth in all respects, and can be used in step b) of browning the blanched meat, avoiding product weight loss.

Furthermore, in the step of browning, advantageously the fat released by the meat during the step of blanching in the continuous boiler is used. In particular, such fat is separated from the meat with the broth obtained in the blanching step and, after being fed into the turbo-cooker, it allows a uniform and effective browning of the ingredients, thus avoiding the addition of a further fatty ingredient.

Preferably, the minced meat is beef, pork, sheep meat, horsemeat, poultry or fish.

Preferably, the vegetables are selected from the group comprising onion, shallot, carrot, celery, garlic, parsley and the complementary ingredients are selected from the group comprising salt, oil, pepper, garlic, rosemary, sage, mint, oregano, parsley, thyme, bay, cloves, basil, chives, marjoram, nutmeg, coriander, eggs, animal fats, butter, ricotta, cream, mushrooms, breadcrumbs and flour.

### Brief description of the drawings

Figure 1 is a schematic representation of a two-phase system for implementing an embodiment of the process according to the present invention.
Figure 2 is a schematic representation of a mono-phase system for implementing an embodiment of the process, which is not according to the present invention.

### Detailed description of a preferred embodiment

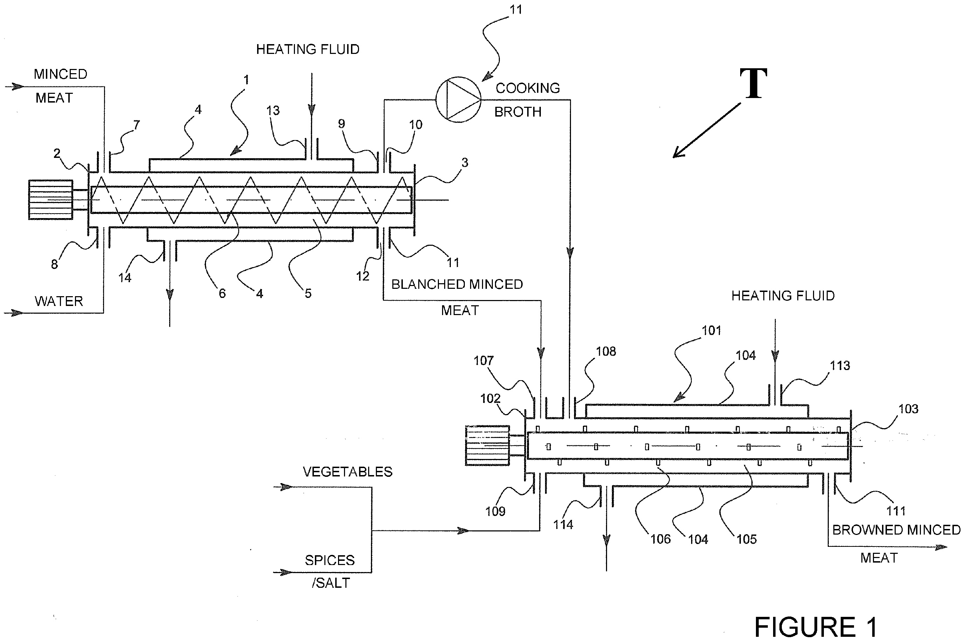

With reference to figure 1, a device for implementing the process according to the present invention comprises a continuous boiler, essentially consisting of a cylindrical tubular body 1, closed at opposite ends by end plates 2, 3 and coaxially provided with a heating jacket 4 (or a cooling jacket), intended to be passed through by a fluid, preferably consisting of water vapour or diathermic oil to keep the inner wall 5 of the body 1 at a predetermined temperature. The aforesaid fluid is continuously fed, by means of the inlet opening 13, into the aforesaid jacket 4 and discharged by means of the discharge opening 14.

The tubular body 1 is provided with inlet openings 7, 8, for the raw minced meat and for a constant flow of hot water respectively, and discharge openings 9 and 11 for the blanched minced meat and broth respectively.

Clearly, it is possible to envisage the presence of a greater number of inlet and discharge openings depending on contingent and specific needs.

In the tubular body 1 it is coaxially and rotatably supported a screw rotor 6, which, by rotating, causes a continuous mixing of the raw minced meat and hot water in order to allow a uniform blanching of the minced meat and a suitable aromatization of the hot water caused by the close contact with the raw minced meat, so as to obtain a cooking broth.

Simultaneously, the screw rotor 6 also advances the blanched minced meat thus obtained towards the discharge opening 11, positioned in the lower part of the tubular body 1, and the broth towards the discharge opening 9, positioned in the upper part of the tubular body 1.

When it exits the continuous boiler, the aforesaid cooking broth is fed, by means of the conduit 10, in communication with the outlet opening 9 of the continuous boiler and by means of the pump 15 applied to such conduit 10, into a turbo-cooker T comprised in the system according to the present invention.

When it exits the continuous boiler, the aforesaid blanched minced meat is fed, by means of the conduit 12, in communication with the outlet opening 11 of the continuous boiler, into the aforesaid turbo-cooker T. The turbo-cooker T, comprises a cylindrical tubular body 101, with a heatable inner wall 105, closed at opposite ends by end plates 102, 103, provided with an inlet opening 107 for the blanched minced meat, minced or chopped vegetables and optional complementary ingredients, and an inlet opening 108 for the broth, as well as a discharge opening 111 for a continuous flow of browned minced meat, browned vegetables and optional complementary ingredients.

Clearly, it is possible to envisage the presence of a greater number of inlet and discharge openings depending on contingent or specific needs.

A coaxial bladed rotor 110 is rotatably supported in the tubular body 101, whose blades 106 are arranged helically and oriented to centrifuge and simultaneously convey the flow of browned minced meat, vegetables and optional complementary ingredients towards the discharge opening 111. Heating means 104 are arranged coaxially and externally to the cylindrical tubular body 101, which heating means are represented schematically and consist of electrical resistors or sources of radiofrequency applied to the outer surface of the cylindrical tubular body 101 or a coaxial outer jacket intended to be passed through by a heating fluid, preferably consisting of water vapour or diathermic oil.

In the embodiment, wherein such jacket 104 is passed through by a fluid, such fluid is continuously fed through the inlet opening 113 into the aforesaid jacket and discharged by means of the discharge opening 114.

Using the above-described equipment, the process according to the present invention, in a non-limiting embodiment thereof, comprises a first step of rapid blanching of the minced meat and optionally the vegetables and complementary ingredients in boiling water, in the continuous boiler and a second step of browning of the blanched meat.

In one embodiment, the raw meat and the vegetables, previously chopped to obtain pieces with sizes from 4 mm to 8 mm, and optional complementary ingredients are mixed and fed as a continuous flow into the continuous boiler.

A continuous flow of hot water (temperature from 90°C to 100°C) is also fed into the continuous boiler.

After an average residence time from 2 minutes to 6 minutes in the boiler, which allows the pre-coagulation of the surface proteins of the minced meat, a continuous flow of blanched minced meat, blanched vegetables and optional complementary ingredients is discharged, and a continuous flow of broth deriving from the contact between the hot water, the minced meat, the vegetables and the optional complementary ingredients inside the continuous boiler is also discharged.

The aforesaid continuous flow of broth further contains the fat released by the minced meat during the step of blanching.

After separating the blanched minced meat, vegetables and optional complementary ingredients from the broth, a continuous flow of blanched minced meat and blanched vegetables and optional complementary ingredients, and a continuous flow of broth are fed simultaneously into a turbo-cooker, in which the bladed rotor 110 is rotated at a peripheral speed from 5 m/s (270 rpm) to 10 m/s (540 rpm), through the inlet openings 107, 108 for the blanched meat, blanched vegetables and optional complementary ingredients, and for the broth respectively. Due to the intense mechanical action exerted by the blades 106 of the rotor 110, said continuous flow is centrifuged against the inner wall 105 of the turbo-cooker, forming a highly turbulent, dynamic, thin, tubular, fluid layer, wherein the particles of such minced foods advance, driven by the blades 106, in substantial contact with the inner wall of the turbo-cooker, heated to a temperature of about 180°C due to the presence of the jacket 104, heated to a temperature of 200°C, towards the discharge opening 111.

The kinetic energy imparted by the blades of the rotor together with the thermal energy supplied by the close contact with the heated wall 105 of the cylindrical tubular body 101 for a period of time of 1-10 minutes, preferably 1.5-3 minutes, bring about a uniform browning of the minced meat and vegetables, as well as the sterilization of such foods, which is also contributed to by the steam generated inside the turbo-cooker.

After such time, a continuous flow of browned meat, vegetables and optional complementary ingredients adapted to be used as a base for ragù or stuffings and a continuous flow of water vapour, which is extracted by an extractor hood and discharged into the atmosphere or condensed with conventional condensing equipment, are discharged from the discharge opening 111.

In another embodiment, the flow of vegetables and optional complementary ingredients is added to the flow of blanched minced meat exiting the continuous boiler, before the step of browning in the turbo-cooker (Figure 1).

In this embodiment, the flow of vegetables and optional complementary ingredients is fed through the inlet opening 109 into the turbo-cooker at the same time as the flow of blanched minced meat and the flow of broth.

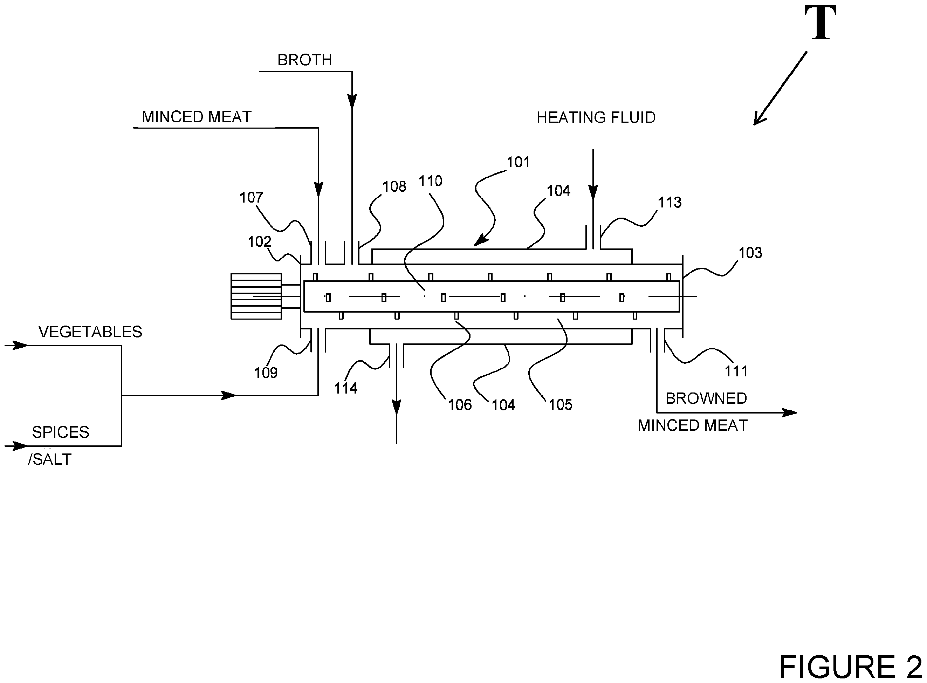

In a further embodiment, which is not according to the present invention, the raw minced meat and the vegetables previously chopped to obtain pieces with sizes from 4 mm to 8 mm, and optional complementary ingredients, are mixed and fed as a continuous flow into the turbo-cooker, according to Figure 2.

In this embodiment, all of the ingredients of the base for ragù or stuffings according to the present invention are cooked directly in the turbo-cooker; in particular, the flow of raw minced meat is fed by the inlet opening 107, the flow of chopped vegetables and optional complementary ingredients is fed by the inlet opening 109. A continuous flow of base for ragù or stuffings comprising browned meat and chopped vegetables and optional complementary ingredients is then discharged from the discharge opening 111.

The present invention is further described with reference to embodiments of the process, which are provided purely by way of non-limiting examples.

### EXAMPLE 1

The minced meat, which has a particle size of about 6 mm, is mixed with the vegetables in cubes of about 10 mm and complementary ingredients (salt and pepper) before the step of blanching in the continuous boiler.

The process as described above comprises the following operating conditions:

### Blanching in the continuous boiler:

Initially, the continuous boiler is filled to about one third of the volume thereof with water, which was brought to 96°C, then, a continuous flow of minced meat and vegetables is introduced through the inlet opening 7 with a flow rate of 108 kg/h and after an average residence time of 5'30" a flow of blanched meat and vegetables and a flow of broth start to be discharged continuously through the respective discharge openings 11 and 9 (T° 80°C) and, at the same time, a continuous flow of water at 96°C starts to be fed through the inlet opening 8, with such a flow rate as to compensate the broth discharged from the discharge opening 9.

### Browning in the turbo-cooker:

The continuous flow of minced meat and blanched vegetables discharged from the continuous boiler with a flow rate of 100kg/h is introduced through the inlet opening 107 of the turbo-cooker 101 and, a continuous flow of the cooking broth discharged from the continuous boiler is introduced through the inlet opening 108 with a flow rate of 20kg/h. After an average residence time of 2 minutes inside the turbo-cooker, whose heating jacket 104 was kept at a temperature of 200°C and whose bladed rotor was rotated at a speed of 400 rpm, a flow of minced meat and browned vegetables (T° 95°C) is discharged continuously through the discharge opening 111.

### EXAMPLE 2

The particle size of the minced meat is about 8 mm.

The chopped vegetables with a size of 6 mm and complementary ingredients (salt and pepper) are added to the flow of blanched meat before the step of browning.

The process comprises the following operating conditions:

### Blanching in the continuous boiler:

Initially, the continuous boiler is filled to about one third of the volume thereof with water, which was brought to 96°C, then, a continuous flow of minced meat is introduced through the inlet opening 7 with a flow rate of 100 kg/h and after an average contact time of 5'30" a flow of blanched minced meat (T° 82°C) and a flow of broth start to be discharged continuously through respective discharge openings 11 and 9 and, at the same time, a continuous flow of water at 96°C starts to be fed through the inlet opening 8, with such a flow rate as to compensate the broth discharged from the discharge opening 9.

### Browning in the turbo-cooker:

The continuous flow of blanched minced meat discharged from the continuous boiler is introduced with a flow rate of 93 kg/h through the inlet opening 107 of the turbo-cooker 101 and a continuous flow of cooking broth discharged from the continuous boiler, with a flow rate of 20 kg/h is introduced through the inlet opening 108.

Simultaneously, a continuous flow of chopped vegetables and complementary ingredients is introduced through the inlet opening 109 with a flow rate of 31 kg/h. After an average residence time of 2 minutes inside the turbo-cooker, whose heating jacket 104 was kept at a temperature of 190°C and whose bladed rotor was rotated at a speed of 400 rpm, a flow of minced meat and browned vegetables (T° 95 °C) is discharged continuously through the discharge opening 111.

### EXAMPLE 3 (not according to the present invention)

The raw minced meat (particle size of about 8 mm), the chopped vegetables (particle size of about 8 mm) and the complementary ingredients (salt and pepper) are added to the turbo-cooker, in the presence of a broth.

A continuous flow of minced meat with a flow rate of 100 kg/h is introduced through the inlet opening 107 of the turbo-cooker 101 and a continuous flow of chopped vegetables and complementary ingredients is introduced through the inlet opening 109 with a flow rate of 35 kg/h. A continuous flow of broth is also fed through the inlet opening 108 with a flow rate of 20 kg/h.

After an average residence time of 3 minutes inside the turbo-cooker, whose heating jacket 104 was kept at a temperature of 200°C and whose bladed rotor was rotated at a speed of 350 rpm, a flow of browned minced meat and vegetables (T° 94°C) is discharged continuously through the discharge opening 111.

## Claims

1. Process for the production of a base for ragù or stuffings, comprising minced meat, vegetables and optional complementary ingredients, said process comprising a step a) of subjecting minced meat and optionally minced or chopped vegetables and complementary ingredients to a blanching in water at a temperature of 90°-100°C for 4-8 minutes and a subsequent step b) of browning said blanched minced meat and, optionally, said blanched vegetables and complementary ingredients.

2. Process according to claim 1, wherein, in said step a) only said minced meat is subjected to blanching and in said step b) said blanched minced meat is browned after the addition thereto of minced or chopped vegetables and optional complementary ingredients.

3. Process according to any one of the preceding claims, wherein chopped vegetables are used with a particle size from 5 to 15 mm, preferably from 5 to 8 mm.

4. Process according to any one of the preceding claims, wherein said step a) of blanching in water at 90°-100°C is carried out by means of a continuous boiler, which preferably consists of a cylindrical body (1) with a heating jacket (4), closed at opposite ends by end plates (2,3), provided with inlet openings (7, 8) and discharge openings (9, 11) having a coaxial screw rotor (6) rotatably supported therein.

5. Process according to claim 4, wherein said minced meat is fed into said continuous boiler with a flow rate from 90 kg/h to 500 kg/h.

6. Process according to any one of the preceding claims, wherein said step b) of browning is carried out by means of the steps of:
- providing a turbo-cooker comprising a cylindrical body (101) with a heating jacket (104), closed at opposite ends by end plates (102, 103), provided with at least one inlet opening (107, 108, 109) and at least one discharge opening (111) having a coaxial bladed rotor (110) rotatably supported therein;
- feeding a flow of said blanched meat and a flow of said minced or chopped vegetables that have optionally been blanched, as well as optional complementary ingredients, into said continuous boiler, through said at least one inlet opening, the inner wall of the turbo-cooker (105) being kept at a temperature from 150°C to 250°C by means of said heating jacket (104) and the rotor (110) being rotated at a peripheral speed from 5 m/s to 10 m/s;
- discharging from the at least one outlet opening (111) of the turbo-cooker a continuous flow of said base comprising minced meat and vegetables and optional complementary ingredients.

7. Process according to any one of the preceding claims, wherein said minced meat of said base has a particle size from 2 to 10 mm, conveniently from 4 to 8 mm and wherein, in said step b) of browning, said blanched minced meat is fed into said turbo-cooker with a flow rate from 90 kg/h to 500 kg/h.

8. Process according to any one of claims 6 and 7, wherein step b) of browning is carried out at a temperature from 130°C to 180°C, for a period of time from 1 minute to 5 minutes.

9. Process according to any one of claims 6-8, wherein, in said step b), a flow of broth is fed through the at least one inlet opening at the same time as said flow of blanched minced meat and said flow of minced or chopped vegetables, as well as of said optional complementary ingredients, said broth preferably consisting of said water used in step a) of blanching said meat and optionally said vegetables and said complementary ingredients and of fat released by the minced meat during said step a).

10. Process according to any one of the preceding claims, wherein said minced meat is beef, pork, sheep meat, horsemeat, poultry or fish.

11. Process according to any one of the preceding claims, wherein said vegetables are selected from the group comprising onion, shallot, carrot, celery, garlic, parsley, and said complementary ingredients are selected from the group comprising salt, oil, pepper, garlic, rosemary, sage, mint, oregano, parsley, thyme, bay, cloves, basil, chives, marjoram, nutmeg, coriander, eggs, animal fats, butter, ricotta, cream, mushrooms, breadcrumbs and flour.

## Patentansprüche

1. Verfahren für die Herstellung eines Grundrezepts für Ragout oder Füllungen, umfassend Hackfleisch, Gemüse und optionale komplementäre Zutaten, wobei das Verfahren folgende Schritte umfasst: einen Schritt a) eines Durchführens eines Blanchierens von Hackfleisch und wahlweise von zerhacktem oder zerkleinertem Gemüse und komplementären Zutaten in Wasser bei einer Temperatur von 90 °C - 100 °C 4-8 Minuten lang und einen darauffolgenden Schritt b) eines Anbratens des blanchierten Hackfleischs und wahlweise der blanchierten Gemüse und komplementären Zutaten.

2. Verfahren nach Anspruch 1, wobei, in dem Schritt a), das Blanchieren nur in Bezug auf das Hackfleisch durchgeführt wird und, in Schritt b), das blanchierte Hackfleisch nach Hinzufügen von zerhackten oder zerkleinerten Gemüsen und optionalen komplementären Zutaten angebraten wird.

3. Verfahren nach einem der vorhergehenden Ansprüche, wobei die zerkleinerten Gemüse mit einer Teilchengröße von 5 bis 15 mm, bevorzugt 5 bis 8 mm, verwendet werden.

4. Verfahren nach einem der vorhergehenden Ansprüche, wobei der Schritt a) des Blanchierens in Wasser bei 90 °C-100 °C mittels eines kontinuierlichen Siedekessels ausgeführt wird, der bevorzugt aus einem zylindrischen Körper (1) mit einem Heizmantel (4) besteht, der an entgegengesetzten Enden durch Endplatten (2, 3) geschlossen ist, die mit Einlassöffnungen (7, 8) und Auslassöffnungen (9, 11) ausgestattet sind, die einen koaxialen Schraubenrotor (6) aufweisen, der drehbar darin abgestützt ist.

5. Verfahren nach Anspruch 4, wobei das Hackfleisch in den kontinuierlichen Siedekessel mit einer Strömungsrate von 90 kg/h bis 500 kg/h eingeführt wird.

6. Verfahren nach einem der vorhergehenden Ansprüche, wobei der Schritt b) des Anbratens durch die folgende Schritte ausgeführt wird:
- Bereitstellen eines Turbosiedekessels umfassend einen zylindrischen Körper (101) mit einem Heizmantel (104), der an entgegengesetzten Enden durch Endplatten (102, 103) geschlossen ist, die mit mindestens einer Einlassöffnung (107, 108, 109) und mindestens einer Auslassöffnung (111) ausgestattet sind, die einen koaxialen Schraubenrotor (110) aufweisen, der drehbar darin abgestützt ist;
- Einführen einer Strömung des blanchierten Fleischs und einer Strömung der zerhackten oder zerkleinerten Gemüse, die wahlweise blanchiert worden sind, sowie optionaler komplementärer Zutaten in den kontinuierlichen Siedekessel durch mindestens eine Einlassöffnung, wobei die Innenwand des Turbosiedekessels (105) bei einer Temperatur von 150 °C bis 250 °C durch den Heizmantel (104) und den Rotor (110) gehalten wird, der mit einer Umfangsgeschwindigkeit von 5 m/s bis 10 m/s gedreht wird;
- Auslassen, aus der mindestens einen Auslassöffnung (111) des Turbosiedekessels, einer kontinuierlichen Strömung des Grundrezepts umfassend Hackfleisch und Gemüse und optionale komplementäre Zutaten.

7. Verfahren nach einem der vorhergehenden Ansprüche, wobei das Hackfleisch des Grundrezepts eine Teilchengröße von 2 bis 10 mm, passenderweise von 4 bis 8 mm, aufweist und wobei, in Schritt b) des Anbratens, das blanchierte Hackfleisch in den Turbosiedekessel mit einer Strömungsrate von 90 kg/h bis 500 kg/h eingeführt wird.

8. Verfahren nach einem der Ansprüche 6 und 7, wobei der Schritt b) des Anbratens bei einer Temperatur von 130 °C bis 180 °C für eine Zeitspanne von 1 Minute bis 5 Minuten ausgeführt wird.

9. Verfahren nach einem der Ansprüche 6-8, wobei, in Schritt b), eine Strömung von Bouillon durch die mindestens eine Einlassöffnung gleichzeitig mit der Strömung von blanchiertem Hackfleisch und der Strömung von zerhackten oder zerkleinerten Gemüsen sowie der optionalen komplementären Zutaten geführt wird, wobei die Bouillon bevorzugt aus dem Wasser, das in Schritt a) des Blanchierens des Fleischs und wahlweise der Gemüse und der komplementären Zutaten verwendet wird, und aus Fett, das durch das Hackfleisch während des Schritts a) freigesetzt wird, besteht.

10. Verfahren nach einem der vorhergehenden Ansprüche, wobei das Hackfleisch Rind-, Schweine-, Schaffleisch, Pferdefleisch, Geflügel oder Fisch ist.

11. Verfahren nach einem der vorhergehenden Ansprüche, wobei die Gemüse aus der Gruppe ausgewählt sind, bestehend aus Zwiebel, Schalotte, Karotte, Sellerie, Knoblauch, Petersilie, und die optionalen Zutaten aus der Gruppe ausgewählt sind bestehend aus Salz, Öl, Pfeffer, Knoblauch, Rosmarin, Salbei, Minze, Oregano, Petersilie, Thymian, Lorbeer, Nelken, Basilikum, Schnittlauch, Majoran, Muskat, Koriander, Eiern, tierischen Fetten, Butter, Ricotta, Sahne, Pilzen, Semmelbröseln und Mehl.

## Revendications

1. Procédé de fabrication d'une base pour du ragoût ou des farces, comprenant de la viande hachée, des légumes et des ingrédients complémentaires optionnels, ledit procédé comprenant une étape a) consistant à soumettre la viande hachée et optionnellement des légumes hachés ou émincés et des ingrédients complémentaires à un blanchiment à l'eau à une température allant de 90°-100°C pendant 4 à 8 minutes et une étape ultérieure b) consistant à faire dorer ladite viande hachée blanchie et, optionnellement, lesdits légumes blanchis et ingrédients complémentaires.

2. Procédé selon la revendication 1, dans lequel, dans ladite étape a) seule ladite viande hachée est soumise à un blanchiment et dans ladite étape b) ladite viande hachée blanchie est dorée après l'ajout à elle de légumes hachés ou émincés et d'ingrédients complémentaires optionnels.

3. Procédé selon l'une quelconque des revendications précédentes, dans lequel des légumes émincés sont utilisés avec une granulométrie allant de 5 à 15 mm, de préférence allant de 5 à 8 mm.

4. Procédé selon l'une quelconque des revendications précédentes, dans lequel ladite étape a) de blanchiment dans de l'eau à 90°-100°C est réalisée au moyen d'un bouilleur en continu, qui est de préférence constitué d'un corps cylindrique (1) avec un enveloppe chauffante (4), fermée à ses extrémités opposées par des plaques d'extrémité (2, 3), munie d'ouvertures d'entrée (7, 8) et d'ouvertures de déchargement (9, 11), ayant un rotor à vis coaxial (6) supporté de manière rotative à l'intérieur d'elle.

5. Procédé selon la revendication 4, dans lequel ladite viande hachée est introduite dans ledit bouilleur en continu avec un débit allant de 90 kg/h à 500 kg/h.

6. Procédé selon l'une quelconque des revendications précédentes, dans lequel ladite étape b) consistant à faire dorer est mise en œuvre au moyen des étapes consistant à :
- prévoir un turbo-cuiseur comprenant un corps cylindrique (101) avec une enveloppe chauffante (104), fermée à des extrémités opposées par des plaques d'extrémité (102, 103), munie d'au moins une ouverture d'entrée (107, 108, 109) et d'au moins une ouverture de déchargement (111), ayant un rotor à lames coaxiales (110) supporté de manière rotative à l'intérieur d'elle ;
- introduire un flux de ladite viande blanchie et un flux desdits légumes hachés ou émincés qui ont optionnellement été blanchis, ainsi que des ingrédients complémentaires, dans ledit bouilleur en continu, à travers ladite au moins une ouverture d'entrée, la paroi interne du turbo-cuiseur (105) étant maintenu à une température allant de 150°C à 250°C au moyen de ladite enveloppe chauffante (104) et le rotor (110) étant entraîné en rotation à une vitesse périphérique allant de 5 m/s à 10 m/s ;
- décharger depuis ladite au moins une ouverture de sortie (111) du turbo-cuiseur un flux continu de ladite base comprenant de la viande hachée et des légumes et des ingrédients complémentaires optionnels.

7. Procédé selon l'une quelconque des revendications précédentes, dans lequel ladite viande hachée de ladite base a une granulométrie allant de 2 à 10 mm, commodément de 4 à 8 mm, et dans lequel, à ladite étape b) consistant à faire dorer, ladite viande hachée blanchie est introduite dans ledit turbo-cuiseur avec un débit allant de 90 kg/h à 500 kg/h.

8. Procédé selon l'une quelconque des revendications 6 et 7, dans lequel l'étape b) consistant à faire dorer est mise en œuvre à une température allant de 130°C à 180°C, pendant une durée allant de 1 minute à 5 minutes.

9. Procédé selon l'une quelconque des revendications 6 à 8, dans lequel, dans ladite étape b), un flux de bouillon est alimenté à travers ladite au moins une ouverture d'entrée en même temps que ledit flux de viande hachée blanchie et ledit flux de légumes hachés ou émincés, ainsi que desdits ingrédients complémentaires optionnels, ledit bouillon étant de préférence constitué de ladite eau utilisée à l'étape a) de blanchiment de ladite viande et optionnellement desdits légumes et desdits ingrédients complémentaires et de graisse libérée par la viande hachée lors de ladite étape a).

10. Procédé selon l'une quelconque des revendications précédentes, dans lequel ladite viande hachée est de la viande de bœuf, de porc, de mouton, de cheval, de volaille ou de poisson.

11. Procédé selon l'une quelconque des revendications précédentes, dans lequel lesdits légumes sont choisis dans le groupe comprenant l'oignon, l'échalote, la carotte, le céleri, l'ail, le persil, et lesdits ingrédients complémentaires sont choisis dans le groupe comprenant le sel, l'huile, le poivre, l'ail, le romarin, la sauge, la menthe, l'origan, le persil, le thym, le laurier, les clous de girofle, le basilic, la ciboulette, la marjolaine, la muscade, la coriandre, les œufs, les graisses animales, le beurre, la ricotta, la crème, les champignons, la chapelure et la farine.
